# EUROPÄISCHE PATENTSCHRIFT

(11) **EP 3 522 301 B1**
(45) Veröffentlichungstag und Bekanntmachung des Hinweises auf die Patenterteilung: **17.03.2021**
(21) Anmeldenummer: 18209419.3
(22) Anmeldetag: 30.11.2018
(51) Int. Cl.: H01R 4/30, H01R 4/70, H01R 13/506, H01R 11/28

(54) **VERBINDUNGVORRICHTUNG UND ENERGIEVERSORGUNGSANORDNUNG**
CONNECTION DEVICE AND POWER SUPPLY ASSEMBLY
DISPOSITIF DE RACCORDEMENT ET AGENCEMENT D'ALIMENTATION EN ÉNERGIE

(30) Priorität: 31.01.2018 DE 102018201439
(43) Veröffentlichungstag der Anmeldung: 07.08.2019
(73) Patentinhaber: Volkswagen Aktiengesellschaft, 38440 Wolfsburg (DE)
(72) Erfinder: Schumann, Thorben, 38118 Braunschweig (DE); Hettwer, Sandra, 31234 Edemissen (DE)

(56) Entgegenhaltungen:
- EP-A2- 2 063 492
- WO-A1-2011/099652
- DE-A1-102013 005 092
- DE-B3-102014 012 320
- US-A1- 2012 108 107
- US-A1- 2014 322 994

## Beschreibung

Die Erfindung betrifft eine Verbindungsvorrichtung zum elektrischen Verbinden von zumindest zwei elektrischen Anschlüssen miteinander, mit einem elektrisch leitfähigen Verbinder, der zumindest eine Durchgangsöffnung zur Aufnahme eines Schraubenschafts einer Befestigungsschraube aufweist, mit zumindest einer elektrisch nicht-leitfähigen und insbesondere mehrteilig ausgebildeten Verbinderabdeckung zur berührungsgeschützten Aufnahme des Verbinders und mit zumindest einer elektrisch leitfähigen Befestigungsschraube, die in ein Gegengewinde eines der Anschlüsse einschraubbar ist.

Weiterhin betrifft die Erfindung eine Energieversorgungsanordnung, die die oben genannte Verbindungsvorrichtung und zumindest einen elektrischen Anschluss aufweist.

Aus der Offenlegungsschrift DE 10 2016 200 451 A1 ist bereits eine Verbindungsvorrichtung der Eingangs genannten Art bekannt. Zum Anschluss von Hochvoltspeichern und/oder Hochvoltverbrauchern ist es bekannt, diese durch eine Verbindungsvorrichtung elektrisch zu kontaktieren oder miteinander zu verbinden, welche zumindest einen berührungsgeschützten elektrischen Verbinder aufweist. Der Verbinder ist in einer mehrteiligen Verbinderabdeckung, die selbst elektrisch nicht-leitfähig beziehungsweise elektrisch isolierend ausgebildet ist, angeordnet beziehungsweise anordenbar, so dass bei der Verwendung der Verbindungsvorrichtung Personen vor der elektrischen Spannung beziehungsweise vor einem durch den Verbinder fließenden elektrischen Strom geschützt sind. Insbesondere auch bei der Montage wird hierdurch erreicht, dass der die Verbindungsvorrichtung montierende Monteur keinerlei Gefahr ausgesetzt ist. In der oben genannten Offenlegungsschrift ist dabei vorgesehen, dass die Befestigungsschraube selbst mit einer elektrisch isolierenden Schutzschicht versehen ist, und während der Montage der Einzelteile vom Monteur hinzugefügt wird.

Eine Verbindungsvorrichtung mit den Merkmalen des Oberbegriffs des Anspruchs 1 ist beispielsweise aus der Offenlegungsschrift DE 10 2013 005 092 A1 bekannt. Weitere Verbindungsvorrichtungen sind aus den Druckschriften EP 2 063 492 A2, US 2012/0108107 A1, DE 10 2014 012 320 B3 sowie aus der Offenlegungsschrift US 2014/0322994 A1 bekannt. Der Erfindung liegt die Aufgabe zugrunde, eine verbesserte Verbindungsvorrichtung zu schaffen, welche die Montage bei gleichbleibend hoher oder verbesserter Sicherheit vereinfacht.

Die der Erfindung zugrunde liegende Aufgabe wird durch eine Verbindungsvorrichtung mit den Merkmalen des Anspruchs 1 gelöst. Diese hat den Vorteil, dass der Monteur die Befestigungsschraube bereits positionieren kann, bevor er die Verbindungsvorrichtung den Anschlüssen zuführt, so dass er die Befestigungsschraube in einem Zustand vormontiert, in welchem die Anschlüsse der zu verbindenden Anlage noch nicht elektrisch kontaktiert sind. Erfindungsgemäß wird dadurch erreicht, dass die Verbinderabdeckung eine Einrichtung zum lösbaren Halten der zumindest einen Befestigungsschraube in einer Vormontagestellung aufweist. Die Befestigungsschraube ist somit mit der Verbindungsvorrichtung mit transportierbar in einer Vormontagestellung haltbar, so dass der Monteur zur Durchführung der eigentlichen Kontaktierung der Anschlüsse nur noch die Befestigungsschraube aus der Vormontagestellung in die Montagestellung bewegen, insbesondere schrauben muss. Ein Zuführen zu den Anschlüssen derart, dass der Verbinder dabei mit elektrisch kontaktiert, insbesondere berührt oder mechanisch verspannt/eingeklemmt wird, ist dadurch in einfacher Art und Weise gewährleistet. Durch das lösbare Halten in der Vormontagestellung ist insbesondere eine Endmontage der Befestigungsschraube möglich, bei welcher der Benutzer keinerlei Berührungskontakt mit der Befestigungsschraube und/oder dem Verbinder eingehen muss, abgesehen von der Verbindung eines Werkzeugs mit der Befestigungsschraube zum Aufbringen eines Drehmoments auf die Befestigungsschraube. Dabei ist jedoch vorzugsweise auch das Werkzeug elektrisch isolierend ausgebildet und/oder die Befestigungsschraube weist an einer Werkzeugaufnahme oder Kopplungsstelle, wie beispielsweise in der zuvor genannten Druckschrift offenbart, eine elektrische Isolierung auf, so dass auch bei einem mechanischen Berührungskontakt der Befestigungsschraube keine elektrische Kontaktierung erfolgt.

Erfindungsgemäß weist die Einrichtung eine oder mehrere elastisch und/oder plastisch verformbare Rastzungen auf, wobei jede Rastzunge eine Haltenase aufweist, auf welcher der Schraubenkopf in der Vormontagestellung aufliegt oder auflegbar ist, und die durch die Verformung außer Eingriff mit dem Schraubenkopf bringbar ist. Die Befestigungsschraube ist somit bei der Vormontage auf den Haltenasen absetzbar, so dass sie insbesondere beabstandet von den Anschlüssen bei der Montage der Verbindungvorrichtung an den Anschlüssen liegt. Dazu ist die Befestigungsschraube insbesondere in der Verbinderabdeckung derart zurückgezogen angeordnet, dass sie die Abdeckung nicht durchstößt. Durch die Verformbarkeit der Rastzungen ist gewährleistet, dass die Haltenasen außer Eingriff mit dem Schraubenkopf bringbar sind. Sobald dies geschieht, ist die Befestigungsschraube weiter bewegbar und in Eingriff mit den Anschlüssen bringbar. Hierdurch ist eine einfache Vormontagestellung sowie eine einfache Verbringung der Befestigungsschraube in eine Endmontageposition sicher gewährleistet. Insbesondere sind die Rastzungen mit den Haltenasen, beispielsweise durch eine Anlaufschräge, derart ausgebildet, dass bei Aufbringen einer vorgebbaren Axialkraft auf die Befestigungsschraube die Haltenasen durch Verformen der Rastzungen außer Eingriff mit dem Schraubenkopf gebracht werden. Dadurch ist eine einfache Montage für den Monteur gewährleistet.

Weiterhin ist bevorzugt vorgesehen, dass die Einrichtung zumindest zwei einander gegenüberliegend angeordnete Rastzungen aufweist. Dadurch ist die Befestigungsschraube in der Vormontagestellung sicher von zwei Seiten durch die Rastnasen gehalten, wodurch beispielsweise ein Verkippen der Befestigungsschraube vermieden wird. Besonders bevorzugt weist die Einrichtung zumindest vier Rastzungen auf, von denen sich jeweils zwei gegenüber liegen, so dass die Befestigungsschraube in der Vormontagestellung an ihrem Schraubenkopf an vier Stellen sicher gehalten ist. Gemäß einer weiteren Ausführungsform ist bevorzugt vorgesehen, dass die Einrichtung genau drei Rastzungen aufweist, die gleichmäßig über den Umfang der Befestigungsschraube verteilt angeordnet sind, also jeweils in einem Winkel von 120 Grad zueinander angeordnet sind. Bevorzugt erstrecken sich die Rastzungen zumindest abschnittsweise parallel zu dem Schraubenschaft der Befestigungsschraube in der Vormontagestellung, wobei sie an einem von dem Schraubenkopf entfernten Ende befestigt sind und an ihrem dem Schraubenkopf zugewandten Ende jeweils die Rastnase aufweisen. Dadurch bieten die Rastzungen einen langen Hebel, durch welchen die Rastnasen durch elastische und/oder plastische Verformungen der jeweiligen Rastzunge nach außen beziehungsweise von dem Schraubenschaft weg bewegbar sind, um außer Eingriff mit dem Schraubenkopf zu geraten.

Erfindungsgemäß ist vorgesehen, dass die Verbinderabdeckung ein Unterteil, an welchem der zumindest eine Verbinder anordenbar ist, und ein Oberteil, welches an dem Unterteil unter Einschließen des Verbinders anordenbar ist, aufweist, und wobei die Rastzungen an dem Unterteil der Verbinderabdeckung angeordnet sind und sich in Richtung des Oberteils erstrecken. Hierdurch wird durch die Verbinderabdeckung ein kompaktes Gehäuse gebildet, welches einen Berührungsschutz für den darin angeordneten Verbinder bietet. Dadurch, dass sich die Rastzungen in Richtung des Oberteils erstrecken, sind sie insbesondere auch in dem Oberteil geschützt liegend angeordnet, so dass ein versehentliches Lösen der Befestigungsschraube aus der Halte-Einrichtung vermieden ist. Dadurch ist eine Fehlbenutzung der Verbindungsvorrichtung sicher vermieden.

Weiterhin sind die Rastzungen bevorzugt derart ausgebildet, dass sie mit ihren Rastnasen unter Vorspannung an dem Schraubenschaft der Befestigungsschraube anliegen, wenn sich die Befestigungsschraube in der Vormontagestellung befindet. Hierdurch ergibt sich der Vorteil, dass die Rastnasen die Befestigungsschraube nicht nur axial, sondern auch radial stützen, wodurch insbesondere die Ausrichtung der Befestigungsschraube in der Vormontagestellung gesichert ist. In ihrer Ausgangsstellung liegen die Rastnasen dazu bevorzugt derart nah beieinander, dass der Abstand zwischen ihnen kleiner ist als der Durchmesser des Schraubenkopfes. Insbesondere sind die Rastzungen einer Öffnung des Unterteils zugeordnet, durch welche die Befestigungsschraube in Richtung des Verbinders und/oder der Anschlüsse axial verlagerbar ist, so dass durch die Rastnasen die Befestigungsschraube bereits an der richtigen Position für den späteren Befestigungsvorgang und Kontaktiervorgang gehalten ist.

Weiterhin weist das Oberteil erfindungsgemäß einen becherförmigen Aufnahmedom für die Befestigungsschraube und die der Befestigungsschraube zugeordneten Rastzungen der Einrichtung auf. Der Befestigungsdom steht somit von dem übrigen Oberteil vor, und ist von dem Monteur einfach und sicher auffindbar, so dass der Montagevorgang vom Monteur schnell und sicher durchführbar ist. In dem Aufnahmedom liegen die Befestigungsschraube und die Rastzungen sicher geschützt.

Gemäß einer bevorzugten Weiterbildung der Erfindung weist der Aufnahmedom eine Aussparung im Domboden auf, durch welche ein Schraubwerkzeug zum Beaufschlagen der in dem Aufnahmedom liegenden Befestigungsschraube mit einem Anzugsdrehmoment einführbar ist. Dadurch ist der Verschraubungsvorgang der Befestigungsschraube einfach und sicher durchführbar. Darüber hinaus kann der Benutzer durch die Aussparung hindurch erkennen, ob eine Befestigungsschraube in der Verbindungvorrichtung beziehungsweise innerhalb der Verbinderabdeckung angeordnet wurde und sich in der Vormontagestellung befindet.

Das Unterteil weist bevorzugt zumindest einen ersten Abschnitt auf, auf welchen der Verbinder auflegbar ist, und zumindest einen zweiten Abschnitt, welcher den auf den ersten Abschnitt aufgelegten Verbinder auf einer von dem ersten Abschnitt angewandten Seite übergreift, wobei die Rastzungen an dem zweiten Abschnitt ausgebildet oder angeordnet sind. Der Verbinder ist somit an einem Unterteil zwischen dem ersten und dem zweiten Abschnitt anordenbar. Dadurch ist der Verbinder vorteilhaft in dem Unterteil positionierbar, so dass ein einfaches Fügen mit dem Oberteil gewährleistet ist. Dadurch, dass der Verbinder von zwei Seiten durch das Unterteil formschlüssig gehalten ist, durch den ersten Abschnitt auf der einen Seite und den zweiten Abschnitt auf der anderen Seite, wird die Vormontage vereinfacht. Dadurch, dass die Rastzungen an dem zweiten Abschnitt ausgebildet oder angeordnet sind, ist gewährleistet, dass die Rastzungen in Richtung des Oberteils vorstehen und zum vorteilhaften Vorpositionieren der Befestigungsschraube in der Vormontagestellung nutzbar sind.

Weiterhin ist bevorzugt vorgesehen, dass das Oberteil an dem Unterteil durch wenigstens eine Verrastung befestigbar oder befestigt ist. Durch die Verrastung wird ein einfacher Fügeprozess gewährleistet, bei welchem das Oberteil an dem Unterteil formschlüssig befestigt wird. Durch das Verrasten erfolgt beim Fügen eine elastische Verformung des Oberteils und/oder des Unterteils, so dass das Oberteil das Unterteil oder das Unterteil das Oberteil an zumindest einer Stelle formschlüssig hintergreift. Die Verrastung kann lösbar oder unlösbar gefertigt sein. Weiterhin ist bevorzugt vorgesehen, dass das Unterteil zumindest eine Rastzunge zum Arretieren des zumindest einen Verbinders zwischen dem ersten und dem zweiten Abschnitt aufweist. Durch die Rastzunge wird gewährleistet, dass der Verbinder aus dem Unterteil nicht ohne Weiteres entfernt werden kann, so dass bei der Vormontage der Verbinder sicher in dem Unterteil gehalten ist. Die Rastzunge ist derart ausgewählt, dass der Verbinder, sobald er seine Endposition in dem Unterteil erreicht hat, von der Rastzunge formschlüssig hintergriffen und dadurch in dem Unterteil gehalten wird.

Weiterhin ist bevorzugt vorgesehen, dass das Unterteil einen mittigen ersten Abschnitt und zwei außermittige zweite Abschnitte aufweist. Damit ist der Verbinder sicher in dem Unterteil gelagert. Insbesondere ist die Form des Unterteils, insbesondere der Abstand zwischen den Abschnitten an die Form des Verbinders derart angepasst, dass der Verbinder formschlüssig in dem Unterteil gehalten ist, insbesondere mit nur geringen Toleranzen, so dass Klappergeräusche oder dergleichen vermieden werden. Optional sind der erste und der zweite Abschnitt derart angeordnet, dass ihr projizierte Abstand zueinander geringer ist, als die Höhe des Verbinders, so dass bei der Montage des Verbinders in dem Unterteil das Unterteil elastisch verformt wird, und eine Vorspannkraft auf den Verbinder ausübt, wodurch Klappergeräusche beim späteren Betrieb auch bei Auftreten größerer Vibrationen sicher vermieden werden.

Gemäß einer bevorzugten Ausführungsform der Erfindung weist die Verbindungvorrichtung zumindest zwei Befestigungsschrauben auf, die wie zuvor beschrieben an der Verbinderabdeckung in einer jeweiligen Vormontagestellung anordenbar sind. Dabei ist jeder Befestigungsschraube jeweils eine Einrichtung zugeordnet, wie sie zuvor beschrieben wurde. Insbesondere ist für jeden Anschluss eine Befestigungsschraube vorhanden, um durch das Fügen der Befestigungsschrauben mit den Anschlüssen die elektrische Verbindung durch den Verbinder herzustellen. Dadurch ist ein einfaches Fügen der Verbindungsvorrichtung mit den Anschlüssen beziehungsweise einer die Anschlüsse aufweisenden Anlage gewährleistet.

Vorzugsweise weist die Verbindungsvorrichtung zumindest zwei übereinanderliegende/gestapelte Verbinderelemente auf, wodurch der maximal mögliche Stromfluss durch die Verbindungsvorrichtung erhöht wird und durch Hinzufügen oder Entfernen von Verbindungselementen anpassbar ist.

Insbesondere ist der jeweilige Verbinder als Stromschiene ausgebildet. Hierdurch kann auf bekannte Technologien zurückgegriffen werden, wodurch die Herstellungskosten geringer werden. Insbesondere weist der jeweilige Verbinder für jede der Befestigungsschrauben jeweils eine Öffnung zur Aufnahme beziehungsweise zur Durchführung des jeweiligen Schraubenschafts auf, um eine einfache Montage zu gewährleisten.

Die erfindungsgemäße Energiespeicheranordnung mit den Merkmalen des Anspruchs 15 zeichnet sich durch zumindest eine erfindungsgemäße Verbindungsvorrichtung aus. Es ergeben sich hierdurch die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen:
- Figur 1: eine Explosionsdarstellung einer vorteilhaften Verbindervorrichtung,
- Figuren 2A bis C: unterschiedliche Schnittdarstellungen der Verbindervorrichtung, und
- Figuren 3A bis C: ein weiteres Ausführungsbeispiel der Verbindervorrichtung in unterschiedlichen Montagezuständen.

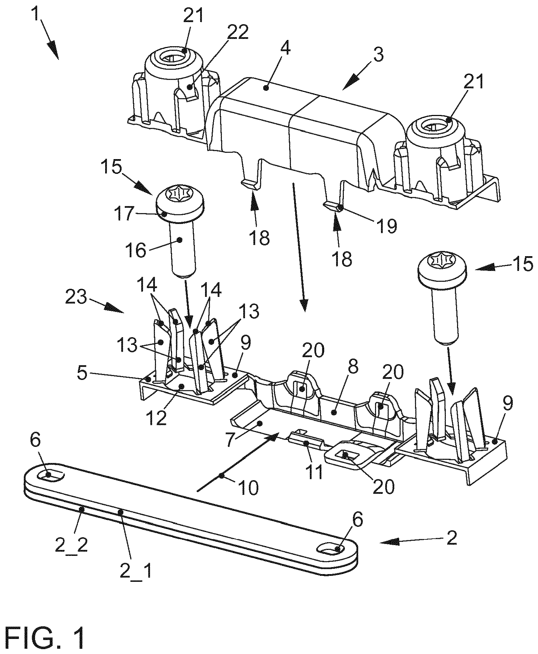

Figur 1 zeigt in einer perspektivischen Explosionsdarstellung eine vorteilhafte Verbindervorrichtung 1 für elektrische Hochspannungseinrichtungen, wie beispielsweise Energiespeicher für Kraftfahrzeuge, insbesondere Traktionsbatterien. Die vorliegende Vorrichtung 1 wird beispielsweise dazu benutzt, die Anschlüsse von zwei Batteriezellen miteinander elektrisch zu verbinden. Dazu weist die Verbindungsvorrichtung 1 einen elektrischen Verbinder 2 auf, der durch eine mehrteilige Verbinderabdeckung 3 berührungsgeschützt anordenbar ist.

Die Verbinderabdeckung 3 weist ein Oberteil 4 und ein Unterteil 5 auf, zwischen denen der Verbinder 2 anordenbar ist. Der Verbinder 2 weist vorliegend zwei übereinander gestapelte Verbinderelemente 2_1 und 2_2 auf, die gleich geformt sind und flächig aufeinander liegen. Durch Hinzufügen weiterer Verbinderelemente ist die maximale Stromleitfähigkeit des Verbinders 2 erweiterbar. Vorliegend sind die Verbinderelemente 2_1, 2_2 plättchenförmig ausgebildet in der Art von Stromschienen und weisen jeweils zwei Durchgangsöffnungen 6 auf, wobei die Durchgangsöffnungen 6 dem jeweiligen Ende der Verbinderelemente 2_1, 2_2 beziehungsweise des Verbinders 2 zugeordnet sind.

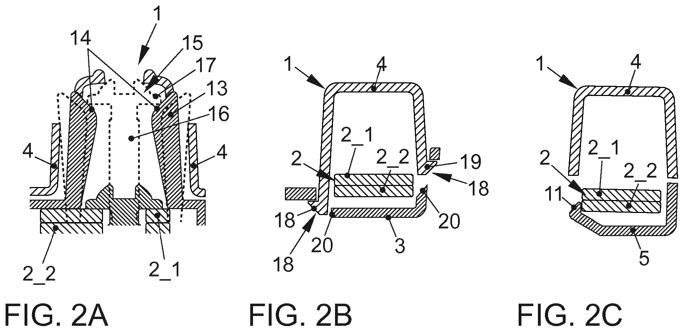

Das Unterteil 5 weist einen mittleren ersten Abschnitt 7 auf, auf welchem der Verbinder 2 ablegbar ist. Durch eine Rückwand 8 ist der mittlere Abschnitt 7 mit zwei äußeren zweiten Abschnitten 9 einstückig verbunden. Die zweiten Abschnitte 9 liegen oberhalb des mittleren Abschnitts 7, so dass zwischen dem mittleren Abschnitt 7 und dem zweiten Abschnitt 9 der Verbinder 2 seitlich einführbar beziehungsweise einschiebbar ist, wie durch einen Pfeil 10 angezeigt. Dabei ist der Verbinder 2 bis zu der Rückwand 8 einschiebbar. Der mittlere Abschnitt 7 weist außerdem eine elastisch verformbare Rastzunge 11 auf, welche den Verbinder 2 hintergreift, wenn der Verbinder vollständig in das Unterteil 5 eingeschoben ist. Um das Einschieben zu vereinfachen, weist die Rastzunge 11 eine Einführschräge auf, durch welche die Rastzunge 11 elastisch verlagert wird, wenn der Verbinder 2 eingeschoben wird. Figur 2C zeigt hierzu einen Schnitt durch die vormontierte Verbindervorrichtung 1 entlang der Linie C-C aus Figur 1 im vormontierten Zustand, wenn der Verbinder 2 mit den beiden Verbinderelementen 2_1 und 2_2 zwischen den Abschnitten 7 und 9 eingeschoben und von der Rastzunge 11 formschlüssig hintergriffen ist.

Die Seitenabschnitte 9 weisen jeweils eine Öffnung 12 auf, an deren Rand jeweils vier Rastzungen 13 angeordnet sind, wobei sich jeweils zwei der Rastzungen 13 gegenüberliegen. Die Rastzungen 13 stehen von dem Abschnitt 9 vor, und zwar in Richtung der von dem mittleren Abschnitt 7 abgewandten Seite des Abschnitts 9, und weisen an ihren freien Enden jeweils eine Rastnase 14 auf. Die Rastnasen 14 werden in diesem Fall durch schräge Stirnflächen der Rastzungen 13 gebildet. Im unbelasteten Zustand liegen die Rastnasen 14 beziehungsweise Rastzungen 13 derart nah beieinander, dass eine Befestigungsschraube 15 mit ihrem Schraubenschaft 16 zwischen den Rastnasen 14 in Richtung des mittleren Abschnitts 9 nur unter elastischer Verlagerung der Rastnasen 14 einschiebbar ist. Die Rastnasen 14 sind dabei derart nah zusammen angeordnet, dass sie beim Einführen des Schraubenschafts 16 geringfügig nach außen gedrängt werden, so dass eine Vorspannkraft durch die Rastzungen 13 auf den Schraubenschaft 16 ausgeübt wird, wodurch die Befestigungsschraube 15 vorteilhaft ausgerichtet wird. Die Schraube 15 ist bis zu ihrem Schraubenkopf 17 zwischen den Rastzungen 13 in Richtung der Öffnung 12 einführbar. Sobald der Schraubenkopf 17 auf den Rastnasen 14 zu liegen kommt, ist ein weiteres Durchschieben der Befestigungsschraube 15 nur mit erhöhtem Kraftaufwand möglich. Damit wird die Befestigungsschraube 15 durch die Rastzungen 13, wenn der Schraubenkopf 17 auf den Rastnasen 14 aufliegt, in einer Vormontagestellung gehalten.

Figur 2A zeigt hierzu eine erste Schnittdarstellung durch die Verbindungsvorrichtung 1, wenn der Verbinder 2 eingelegt und das Oberteil 4 mit dem Unterteil 5 verbunden und die Befestigungsschrauben 15 in ihre Vormontagestellung gebracht sind.

Zum Verbinden des Oberteils 4 mit dem Unterteil 5 weisen Oberteil 4 und Unterteil 5 mehrere Verrastungen 18 auf, die insbesondere durch elastisch verformbare Rastzungen 19, die mit Rastöffnungen 20 des Unterteils 5 zusammenwirken, gebildet sind. Figur 2B zeigt hierzu eine Schnittdarstellung durch die Verbindervorrichtung 1 entlang der Linie B_B aus Figur 1 im vormontierten Zustand, wenn die Verrastungen 18 hergestellt sind

Figur 2A zeigt einen Schnitt durch die Verbindervorrichtung 1 entlang der Linie A_A aus Figur 1, wobei die Befestigungsschraube 15 sich in ihrer Vormontagestellung befindet (gestrichelte Linie). Das Oberteil 4 weist einen Aufnahmedom 21 für die jeweilige Befestigungsschraube 15 und die zugehörigen Rastzungen 13 auf, wobei der Aufnahmedom 21 mehrere Öffnungen 22 in seiner Mantelwand aufweist, durch welche die Rastzungen 13 bereits mit ihren freien Enden hindurchstoßen kann. Insbesondere erlauben die Öffnungen 22, dass die Rastzungen 13 nach außen gedrängt werden, wenn die Befestigungsschraube 15 mit einer erhöhten Axialkraft beaufschlagt wird, die auf die Rastnasen 14 derart wirkt, dass die Rastzungen 13 radial nach außen gebogen und damit außer Eingriff mit dem Schraubenkopf 17 gebracht werden (gestrichelte Linien in Figur 2A). Wird also eine ausreichende Axialkraft auf die Befestigungsschraube 15 aufgebracht, wird die Halterung der Befestigungsschraube 15 gelöst.

Die Haltezungen 13 bilden somit für die Befestigungsschraube 15 jeweils eine Einrichtung 23 zum lösbaren Halten der Befestigungsschraube in einer Vormontagestellung. Sobald die Halterung gelöst ist, ist die Schraube 15 mit dem Schraubenkopf 17 bis auf den Verbinder 2 durch die Öffnung 2 durchschiebbar, wobei die Öffnungen 6 und 12 derart ausgebildet beziehungsweise angeordnet sind, dass die Befestigungsschraube mit dem Schraubenschaft 16 direkt durch jeweilige Öffnung 6 der Verbindung 2 hindurchgeführt ist. Wird die jeweilige Befestigungsschraube 15 nun mit einem Anzugsmoment beaufschlagt und in ein Gegengewinde des jeweils zugehörigen elektrischen Anschlusses der elektrischen Anlage eingeschraubt, ist die Verbindungvorrichtung 1 einfach und sicher an dem Anschluss beziehungsweise an dem jeweiligen Anschluss befestigt und die elektrische Verbindung durch die Verbinder 2 zwischen den beiden Anschlüssen hergestellt.

Dadurch, dass der Verbinder 2 im Wesentlichen in der Verbinderabdeckung 3 eingehaust ist, ist ein vorteilhafter Berührungsschutz für Benutzer und insbesondere den Monteur bei der Montage der Verbindervorrichtung 1 gewährleistet. Durch die vorteilhafte Vormontage der jeweiligen Befestigungsschraube 15 ist außerdem eine besonders einfache und sichere Endmontage gewährleistet. Vorzugsweise ist der Schraubenkopf 17 mit einer elektrisch isolierenden Beschichtung versehen oder aus einem elektrisch isolierenden Material gefertigt, so dass ein besonders hoher elektrischer Schutz für den Benutzer gewährleistet ist. Die unterschiedlichen Verrastungen ermöglichen eine einfache Montage und Vormontage der Verbindervorrichtung 1.

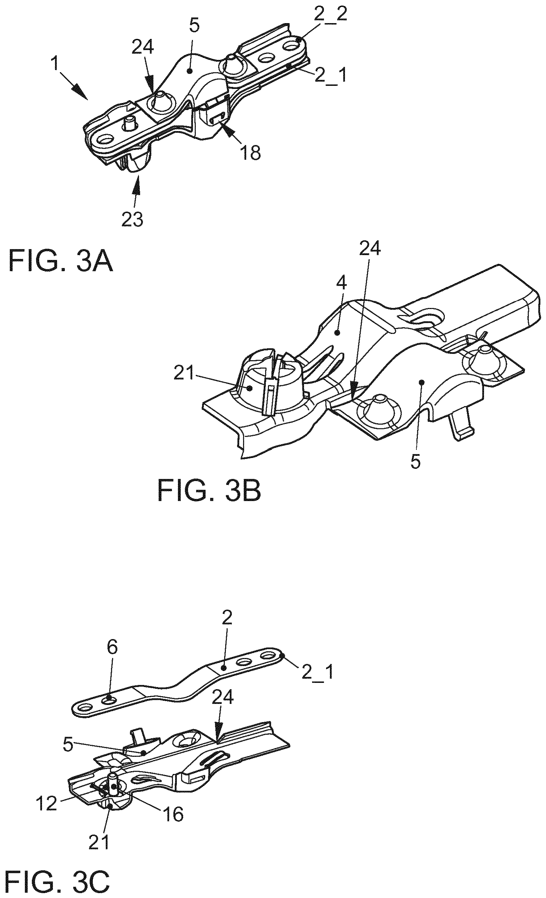

Figuren 3A bis 3C zeigen ein weiteres Ausführungsbeispiel der Verbindervorrichtung 1, wobei aus dem vorhergehenden Ausführungsbeispiel bereits bekannte Elemente mit den gleichen Bezugszeichen versehen sind und insofern auf die oben stehende Beschreibung verwiesen wird. Im Folgenden soll im Wesentlichen auf die Unterschiede eingegangen werden.

Der wesentliche Unterschied zu dem vorhergehenden Ausführungsbeispiel liegt in der Einrichtung 23, durch welche eine der Befestigungsschrauben 15 in eine Vormontagestellung bringbar ist. Dabei basiert die Vormontagestellung jedoch auf der Gewichtskraft der Befestigungsschraube, die in einem Aufnahmedom 21 des Oberteils 4 einlegbar ist. Dabei wird die Befestigungsschraube 15 mit dem Schraubenkopf 17 zuerst in den Aufnahmedom 21 von der dem Unterteil 5 zugewandten Seite eingeführt, so dass der Gewindeschaft beziehungsweise Schraubenschaft 16 in Richtung des Unterteils vorsteht. Anschließend wird der Verbinder 2 aufgelegt, und zwar derart, dass der Schraubenschaft 16 in eine der Aussparungen 6 gelangt. Danach wird das Unterteil 5 aufgelegt und mit dem Oberteil 4 durch eine Verrastung 18 verbunden. Vorliegend sind dabei weist der Verbinder ebenfalls zwei Verbinderelemente 2_1 und 2_2 auf, die sich von dem vorhergehenden Verbinderteil 2_1 und 2_2 dadurch unterscheiden, dass sie mittig eine Ausbeulung aufweisen, wobei die Ausbeulungen einander entgegengewandt sind, so dass eine Federspannung zwischen den Verbindern 2_1 und 2_2 im montierten Zustand entsteht, welche die Verrastung 18 sicher dauerhaft aufrecht erhält.

Gemäß dem Ausführungsbeispiel der Figuren 3A bis 3C ist außerdem vorgesehen, dass Oberteil 4 und Unterteil 5 durch ein Filmscharnier 24 miteinander verbunden sind. Daraus ergibt sich insbesondere eine einteilige Ausbildung der Verbinderabdeckung 3. Zur fertigen Montage wird das Unterteil 5 um eine Achse des Filmscharniers 24 herumgeschwenkt und an seinem freien Ende mit dem Oberteil 4 verrastet. Ein entsprechendes Filmscharnier 24 kann auch bei dem Ausführungsbeispiel von Figuren 1 bis 2 vorgesehen sein.

## Patentansprüche

1. Verbindungsvorrichtung (1) zum elektrischen Verbinden von zumindest zwei elektrischen Anschlüssen miteinander, mit zumindest einem elektrisch leitfähigen Verbinder, der zumindest eine Durchgangsöffnung (6) zur Aufnahme eines Schraubenschafts (16) einer Befestigungsschraube (15) aufweist, mit zumindest einer elektrisch nicht-leitfähigen Verbinderabdeckung (3) zur berührungsgeschützten Aufnahme des Verbinders (2) und mit zumindest einer elektrisch leitfähigen Befestigungsschraube (15), die in ein Gegengewinde eines der Anschlüsse einschraubbar ist, wobei die Verbinderabdeckung (3) eine Einrichtung (23) zum lösbaren Halten der zumindest einen Befestigungsschraube in einer Vormontagstellung aufweist, wobei die Einrichtung (23) eine oder mehrere elastisch und/oder plastisch verformbare Rastzungen (13) aufweist, und wobei jede Rastzunge (13) eine Haltenase (14) aufweist, auf welcher der Schraubenkopf (17) in der Vormontagestellung aufliegt oder auflegbar ist, und die durch die Verformung außer Eingriff mit dem Schraubenkopf (17) bringbar ist, **dadurch gekennzeichnet, dass** die Verbinderabdeckung (3) ein Unterteil (5), in welchem der Verbinder (2) anordenbar ist, und ein Oberteil (4), welches an dem Unterteil (5) unter Einschließen des Verbinders (2) anordenbar ist, aufweist, wobei die Rastzungen (13) an dem Unterteil angeordnet sind und sich in Richtung des Oberteils erstrecken, wobei das Oberteil (4) einen becherförmigen Aufnahmedom (21) für die Befestigungsschraube (15) und die der Befestigungsschraube (15) zugeordneten Rastzungen (13) der Einrichtung (23) aufweist, und wobei der Aufnahmedom (21) mehrere Öffnungen (22) in seiner Mantelwand aufweist, durch welche die Rastzungen (13) mit ihren freien Enden hindurchstoßen können.

2. Verbindungsvorrichtung nach Anspruch 1, **dadurch gekennzeichnet, dass** die Einrichtung (23) zumindest zwei einander gegenüberliegend angeordnete Rastzungen (13) aufweist.

3. Verbindungsvorrichtung nach einem der vorhergehenden Ansprüche, **dadurch gekennzeichnet, dass** die Rastzungen (13) derart ausgebildet sind, dass sie mit ihren Rastnasen (14) unter Vorspannung an dem Schraubenschaft (16) der Befestigungsschraube (15) anliegen, wenn sich die Befestigungsschraube (15) in der Vormontagestellung befindet.

4. Verbindungsvorrichtung nach einem der vorhergehenden Ansprüche, **dadurch gekennzeichnet, dass** der Aufnahmedom (21) eine Aussparung aufweist, durch welche ein Schraubwerkzeug zum Beaufschlagen der in dem Aufnahmedom (21) liegenden Befestigungsschraube (15) mit einem Anzugsdrehmoment aufweist.

5. Verbindungsvorrichtung nach einem der vorhergehenden Ansprüche, **dadurch gekennzeichnet, dass** das Unterteil (5) zumindest einen ersten Abschnitt (7) aufweist, auf welchen der Verbinder (2) auflegbar ist, und zumindest einen zweiten Abschnitt (9), welcher den auf den ersten Abschnitt (7) aufgelegten Verbinder (2) auf einer von dem ersten Abschnitt (7) abgewandten Seite übergreift, und dass die Rastzungen (13) an dem zweiten Abschnitt (9) ausgebildet oder angeordnet sind.

6. Verbindungsvorrichtung nach einem der vorhergehenden Ansprüche, **dadurch gekennzeichnet, dass** das Oberteil (4) an dem Unterteil (5) durch wenigstens eine Verrastung (18) befestigbar oder befestigt ist.

7. Verbindungsvorrichtung nach einem der Ansprüche 5 und 6, **dadurch gekennzeichnet, dass** das Unterteil zumindest eine Rastzunge (11) zum Arretieren des Verbinders (2) zwischen dem ersten und dem zweiten Abschnitt (7,9) aufweist.

8. Verbindungsvorrichtung nach einem der Ansprüche 5 bis 7, **dadurch gekennzeichnet, dass** das Unterteil (5) einen mittigen ersten Abschnitt (7) und zwei außermittige zweite Abschnitte (9) aufweist.

9. Verbindungsvorrichtung nach einem der vorhergehenden Ansprüche, **gekennzeichnet durch** zumindest zwei Befestigungsschrauben (15).

10. Verbindungsvorrichtung nach einem der vorhergehenden Ansprüche, **gekennzeichnet durch** zumindest zwei übereinander gestapelte Verbinderelemente des Verbinders (2).

11. Verbindungsvorrichtung nach einem der vorhergehenden Ansprüche, **dadurch gekennzeichnet, dass** das jeweilige Verbinderelement (2_1,2_2) als Stromschiene ausgebildet ist.

12. Energiespeicheranordnung für ein Kraftfahrzeug, insbesondere Elektrofahrzeug, mit zumindest einer Verbindungvorrichtung (1) nach einem der Ansprüche 1 bis 11.

## Claims

1. Connecting apparatus (1) for the electric connection of at least two electric terminals to one another, with at least one electrically conductive connector which has at least one through opening (6) for receiving a screw shank (16) of a fastening screw (15), with at least one electrically non-conductive connector cover (3) for receiving the connector (2) in a manner which is protected against contact, and with at least one electrically conductive fastening screw (15) which can be screwed into a corresponding thread of one of the terminals, the connector cover (3) having a device (23) for releasably holding the at least one fastening screw in a preassembly position, the device (23) having one or more elastically and/or plastically deformable latching tongues (13), and each latching tongue (13) having a holding lug (14), on which the screw head (17) lies or can be placed in the preassembly position, and which can be brought out of engagement with the screw head (17) by way of the deformation, **characterized in that** the connector cover (3) has a lower part (5), in which the connector (2) can be arranged, and an upper part (4) which can be arranged on the lower part (5) with enclosing of the connector (2), the latching tongues (13) being arranged on the lower part and extending in the direction of the upper part, the upper part (4) having a cup-shaped receiving dome (21) for the fastening screw (15) and the latching tongues (13) of the device (23) which are assigned to the fastening screw (15), and the receiving dome (21) having a plurality of openings (22) in its shell wall, through which openings (22) the latching tongues (13) can penetrate with their free ends.

2. Connecting apparatus according to Claim 1, **characterized in that** the device (23) has at least two latching tongues (13) which are arranged so as to lie opposite one another.

3. Connecting apparatus according to either of the preceding claims, **characterized in that** the latching tongues (13) are configured in such a way that they bear with their latching lugs (14) under prestress against the screw shank (16) of the fastening screw (15) when the fastening screw (15) is situated in the preassembly position.

4. Connecting apparatus according to one of the preceding claims, **characterized in that** the receiving dome (21) has a cut-out, by way of which has a screwing tool for loading the fastening screw (15), which lies in the receiving dome (21), with a tightening torque.

5. Connecting apparatus according to one of the preceding claims, **characterized in that** the lower part (5) has at least one first section (7), onto which the connector (2) can be placed, and at least one second section (9) which engages on a side which faces away from the first section (7) over the connector (2) which is laid on to the first section (7), and **in that** the latching tongues (13) are configured or arranged on the second section (9).

6. Connecting apparatus according to one of the preceding claims, **characterized in that** the upper part (4) can be fastened or is fastened to the lower part (5) by way of at least one latching means (18).

7. Connecting apparatus according to either of Claims 5 and 6, **characterized in that** the lower part has at least one latching tongue (11) for locking the connector (2) between the first and the second section (7, 9).

8. Connecting apparatus according to one of Claims 5 to 7, **characterized in that** the lower part (5) has a central first section (7) and two eccentric second sections (9).

9. Connecting apparatus according to one of the preceding claims, **characterized by** at least two fastening screws (15).

10. Connecting apparatus according to one of the preceding claims, **characterized by** at least two connector elements of the connector (2) which are stacked above one another.

11. Connecting apparatus according to one of the preceding claims, **characterized in that** the respective connector element (2_1, 2_2) is configured as a busbar.

12. Energy storage arrangement for a motor vehicle, in particular an electric vehicle, with at least one connecting apparatus (1) according to one of Claims 1 to 11.

## Revendications

1. Dispositif de liaison (1) destiné à relier électriquement au moins deux bornes électriques entre elles, ledit dispositif comprenant au moins un connecteur électriquement conducteur qui comporte au moins une ouverture traversante (6) destiné à recevoir une tige filetée (16) d'une vis de fixation (15), au moins un capot de connecteur électriquement non conducteur (3) destiné à recevoir le connecteur (2) de manière protégée contre les contacts et au moins une vis de fixation électriquement conductrice (15) qui peut être vissée dans un filetage correspondant de l'une des bornes, le capot de connecteur (3) comportant un moyen (23) destiné à maintenir de manière amovible l'au moins une vis de fixation dans une position de pré-montage, le moyen (23) comportant une ou plusieurs languettes d'encliquetage (13) déformables élastiquement et/ou plastiquement, et chaque languette d'encliquetage (13) comportant un ergot de retenue (14) sur lequel la tête de vis (17) s'appuie ou peut s'appuyer dans la position de pré-montage et qui peut être désengagée de la tête de vis (17) par la déformation, **caractérisé en ce que** le capot de connecteur (3) comporte une partie inférieure (5), dans laquelle le connecteur (2) peut être disposé, et une partie supérieure (4) qui peut être disposée sur la partie inférieure (5) en enfermant le connecteur (2), les languettes d'encliquetage (13) étant disposées sur la partie inférieure et s'étendant en direction de la partie supérieure, la partie supérieure (4) comportant un dôme de réception (21) en forme de gobelet destiné à la vis de fixation (15) et les languettes d'encliquetage (13) du moyen (23) qui sont associées à la vis de fixation (15), et le dôme de réception (21) comportant plusieurs ouvertures (22) qui sont ménagées dans sa paroi d'enveloppe et que les languettes d'encliquetage (13) peuvent transpercer avec leurs extrémités libres.

2. Dispositif de liaison selon la revendication 1, **caractérisé en ce que** le moyen (23) comporte au moins deux languettes d'encliquetage (13) disposées en face l'une de l'autre.

3. Dispositif de liaison selon l'une des revendications précédentes, **caractérisé en ce que** les languettes d'encliquetage (13) sont conçues de façon à venir en appui, avec leurs pattes d'encliquetage (14), sous précontrainte sur la tige de vis (16) de la vis de fixation (15) lorsque la vis de fixation (15) est dans la position de pré-montage.

4. Dispositif de liaison selon l'une des revendications précédentes, **caractérisé en ce que** le dôme de réception (21) comporte un évidement, par lequel comporte un outil de vissage qui applique un couple de rotation sur la vis de fixation (15) située dans le dôme de réception (21).

5. Dispositif de liaison selon l'une des revendications précédentes, **caractérisé en ce que** la partie inférieure (5) comporte au moins une première portion (7), sur laquelle le connecteur (2) peut être placé, et au moins une deuxième portion (9) qui s'engage sur le connecteur (2), placé sur la première portion (7), sur un côté qui est opposé à la première portion (7), et **en ce que** les languettes d'encliquetage (13) sont formées ou disposées sur la deuxième portion (9).

6. Dispositif de liaison selon l'une des revendications précédentes, **caractérisé en ce que** la partie supérieure (4) est ou peut être fixée à la partie inférieure (5) par au moins un encliquetage (18).

7. Dispositif de liaison selon l'une des revendications 5 et 6, **caractérisé en ce que** la partie inférieure comporte au moins une languette d'encliquetage (11) destinée à bloquer le connecteur (2) entre les première et deuxième portions (7, 9).

8. Dispositif de liaison selon l'une des revendications 5 à 7, **caractérisé en ce que** la partie inférieure (5) comporte une première portion centrale (7) et deux deuxièmes portions excentrées (9).

9. Dispositif de liaison selon l'une des revendications précédentes, **caractérisé par** au moins deux vis de fixation (15).

10. Dispositif de liaison selon l'une des revendications précédentes, **caractérisé par** au moins deux éléments de connecteur empilés (2) du connecteur.

11. Dispositif de liaison selon l'une des revendications précédentes, **caractérisé en ce que** l'élément de connecteur respectif (2_1, 2_2) est réalisé sous la forme d'une barre collectrice.

12. Ensemble accumulateur d'énergie destiné à un véhicule automobile, en particulier un véhicule électrique, ledit ensemble comprenant au moins un dispositif de liaison (1) selon l'une des revendications 1 à 11.
